# EUROPEAN PATENT APPLICATION

(11) **EP 1 801 278 A1**
(43) Date of publication of application: **27.06.2007**
(21) Application number: 06026399.3
(22) Date of filing: 20.12.2006
(51) Int. Cl.: D04H 13/00, B32B 13/14

(54) **Coated nonwoven mat**

(30) Priority: 21.12.2005 US 316569
(71) Applicant: Johns Manville, Denver CO 80202 (US)
(72) Inventor: Nandi, Malay, Littleton CO 80124 (US)
(74) Representative: Luderschmidt, Schüler & Partner

(57) **Abstract**

A novel coated nonwoven fibrous mat having properties particularly suited for a facer on gypsum wallboard, laminates made therefrom and the method of making the mat is disclosed. The mat preferably contains a major portion of glass fibers and a minor portion of a resinous binder. The coating is permeable and reduces fiber dust, and yields a smooth surface. The coating comprises mineral pigment and an organic binder.

## Description

### BACKGROUND OF THE INVENTION

### Field of the Invention

The present invention involves coating a fiber mat, with the coating comprising mineral pigment and organic binders. These coated mats have many uses, but are especially useful as a facing on a gypsum wallboard for exterior application and on which stucco is applied.

### Description of the Related Art

Fibrous non-woven mats are often formed into a wet mat from an aqueous dispersion of fibers such as glass and/or synthetic organic fibers which can include other fibers such as cellulose fibers, ceramic fibers, etc. and can also include particles of inorganic material and/or plastics. Usually a solution of urea formaldehyde resin, usually modified with a thermoplastic polymer, or one of many other known resin binders is applied to the wet non-woven web of fibers and then, after removing excess binder and water, the bindered web is dried and heated further to cure the urea formaldehyde resin or other resin binder to form a non-woven mat product. A typical process is disclosed in U.S. Pat. Nos. 6,723,670, 4,112,174 and 3,766,003, the disclosures of which are hereby incorporated herein by reference.

Wallboard formed of a gypsum core sandwiched between facing layers is used in the construction of virtually every modern building. In its various forms, the material is employed as a surface for walls and ceilings and the like, both interior and exterior. It is relatively easy and inexpensive to install, finish, and maintain, and in suitable forms, is relatively fire resistant.

Although paper-faced wallboard is most commonly used for finishing interior walls and ceilings, other forms with different kinds of facings have superior properties that are essential for other uses. One known facing material is non-woven fiberglass mat. U.S. Pat. No. 4,647,496 discloses an exterior insulation system including a fibrous mat-faced gypsum board having a set gypsum core that is water-resistant. The fibrous mat is preferably sufficiently porous for the water in the gypsum slurry to evaporate during the production drying operation as the gypsum sets. The mat comprises fibrous material that can be either mineral-type or a synthetic resin. One preferred mat comprises non-woven fiberglass fibers, randomly oriented and secured together with a modified or plasticized urea formaldehyde resin binder, and sold as DURA-GLASS® 7502 by the Manville Building Materials Corporation.

Notwithstanding the advances in the field of gypsum boards and related articles, there remains a need for a readily and inexpensively produced mat-faced gypsum board having one or more of a smoother surface, and better processing characteristics.

### SUMMARY OF THE INVENTION

Provided herewith is a non-woven fiber mat having a coating comprised of a mineral pigment and an organic binder. The coating penetrates the fiber mat so as to control porosity of the mat and impart a smooth surface to the mat. The mineral pigment is chosen to have a size to allow for good packing and to allow for penetration of the fiber mat, while also permitting sufficient porosity to provide air/vapor permeability. The mineral pigment in the coating also is of sufficient small size to impart, together with the organic binder, a smooth surface to the mat. Preferably, the mineral pigment is of a size (diameter) less than 6µ, and more preferably around 3µ.

The non-woven fiber mat is preferably a glass fiber mat, employing an organic binder. Preferably, the organic binder is a polymeric latex or mixture thereof.

The non-woven fiber mats of the present invention have many different applications, but primarily in laminates comprising a base layer such as a gypsum wallboard. Laminates involving other baseboards such as insulating boards, plywood, foamed boards are also contemplated. However, use in preparing a faced insulating gypsum board is a preferred application.

### DETAILED DESCRIPTION OF THE PREFERRED EMBODIMENTS

It is known to make non-woven mats from glass fibers and to use these mats as substrates in the manufacture of a large number of roofing and other products. Any known method of making non-woven glass fiber mats can be used, such as the conventional wet laid processes described in U.S. Patent Nos. 4,129,674; 4,112,174; 4,681,802; 4,810,576 and 5,484,653, the disclosures of each being hereby incorporated herein by reference. In these processes a slurry of glass fiber is made by adding glass fiber to typical white water in a pulper to disperse the fiber in the white water and to form a slurry having a fiber concentration of about 0.2-1.0 wt.%, metering the slurry into a flow of white water to dilute the fiber concentration to 0.1 wt.% or less, and continuously depositing this mixture onto a moving screen forming wire to dewater and form a wet non-woven fibrous mat. This wet non-woven mat is then conveyed through a binder application where an aqueous resinous binder is applied in excess, the surplus being removed by suction. The wet, bindered mat is then dried and the binder cured to form a non-woven mat product.

The method of U.S. Pat. No. 4,129,674, employs a wet-laid, inclined wire screen mat-forming machine. Generally stated, the method comprises forming a slurry, preferably a water slurry, containing the requisite fibers. The solids content of such a slurry may be very low, such as approximately 0.2%. The slurry is intensely mechanically agitated to disperse the fibers uniformly therein and then dispensed onto a moving screen. A vacuum is applied to remove a substantial part of the water, which is preferably recycled, and thereby form a web of the fibers. After application of a binder, the web is heated to evaporate any remaining water and cure the binder, thus forming the bonded mat. Preferably, the mat-forming process is carried out in a continuous operation. The moving screen is provided as a continuous conveyor-like loop and is slightly upwardly inclined during the portion of its travel in which the fiber slurry is deposited thereon. Subsequently, a binder is applied and the mat heated to effect final drying and curing. After the vacuum step is completed, the web is optionally transferred to one or more additional downstream conveyor systems for binder application and passage through a heated oven for the final drying and curing operation. Machines suitable for carrying out such a web-forming process are available commercially and include devices manufactured under the tradenames Hydroformer^{™} by Voith-Sulzer of Appleton, WS, and Deltaformer^{™} by Valmet/Sandy Hill of Glens Falls, N.Y.

Preferably, the majority of the fibers in the non-woven mat are glass fibers, and most preferably all the fibers are glass fibers. However, this invention is equally applicable to ceramic, natural, wood pulp like, manmade cellulousic fibers and polymeric fibers, and to non-woven webs made from mixtures of any combination of these types of fibers. While the majority of the fibers are glass fibers in the preferred embodiment, all or any portion of non-glass fibers can also be included, such as manmade or natural organic fibers like nylon, polyester, polyethylene, polypropylene, cellulose or cellulose derivatives, etc.

The fibers used in the non-woven mat should be at least 0.25 inch long or longer, more preferably at least one half inch or three quarters inch long and most preferably at least about one inch long, but mixtures of fibers of different lengths and/or fiber diameters can be used as is known. It is preferred that these fibers be coated with a silane containing size composition as is well known in the industry. A preferred continuous glass fiber for fibrous web is at least one member selected from the group consisting of E, C, and T type and sodium borosilicate glasses, and mixtures thereof. As is known in the glass art, C glass typically has a soda-lime-borosilicate composition that provides it with enhanced chemical stability in corrosive environments, and T glass usually has a magnesium aluminosilicate composition and especially high tensile strength in filament form. The present mat is preferably composed of E glass, which is also known as electrical glass and typically has a calcium aluminoborosilicate composition and a maximum alkali content of 2.0%. E glass fiber is commonly used to reinforce various articles. The chopped fibers of the major portion can have varying lengths, but more commonly are substantially of similar length. E glass fiber has sufficiently high strength and other mechanical properties to produce acceptable mats and is relatively low in cost and widely available. Most preferred is E glass having an average fiber diameter of about 11.+-.1.5 µm and a length ranging from about 6 to 12 mm.

The aforementioned glass fibers are bound together with any known water resistant resinous binder. Suitable binders include urea formaldehyde; conventional modified urea formaldehyde; acrylic resins; melamine resins, preferably having a high nitrogen resins such as those disclosed by U.S. Pat. No. 5,840,413; homopolymers or copolymers of polyacrylic acid having a molecular weight of less than 10,000, preferably less than 3,000; crosslinking acrylic copolymer having a glass transition temperature (GTT) of at least about 25°C., crosslinked vinyl chloride acrylate copolymers having a GTT preferably no higher than about 113°C.; and other known flame and water resistant conventional mat binders. It is typically found that a lower GTT promotes better softness and smoothness of the mat surface, but tensile strength is improved with a higher GTT. Binder systems having a GTT ranging from about 15 to 45°C. are thus preferred. Aqueous modified and plasticized urea formaldehyde resin binders may be used and have low cost and acceptably high performance.

A preferred binder for the present mat comprises an acrylate copolymer binder latex with a GTT of about 25°C. available from Noveon, Inc. of Cleveland, Ohio, under the tradename Hycar^{™} 26138. As delivered, this acrylate copolymer latex has a solids content of about 50 weight percent solids, but it is preferred to dilute the concentration with water to about 25 wt. percent solids before using it. Preferably up to about 10 weight percent of a crosslinker such as melamine formaldehyde is added to the acrylate; and more preferably about 2-5 weight percent crosslinker is added. Advantageously, mat bound with the acrylate copolymer latex is smoother and the mat thinner for equivalent weight and properties than with other known binders. In addition, expensive fluorochemical emulsions needed in certain prior art binders are not required.

The amount of acrylate copolymer latex binder (and any optional cross-linker) left in the wet mat during manufacture can be determined by a loss on ignition (LOI) test, the result thereof being specified as a percentage of the dry weight of the finished mat. Preferably, the amount of binder in the final mat, based on its dry weight, ranges from about 15 to 35 wt. percent, with about 20-30 wt. percent being more preferred, and 25.+-.2.5 wt. percent being most preferred. The upper limit is dictated by process constraints and cost, while the minimum is required for adequate tensile strength.

The aqueous binder solution is preferably applied using a curtain coater or a dip and squeeze applicator. Normally, the mat is subjected to temperatures of about 120-330°C. for periods usually not exceeding 1 or 2 minutes, and frequently less than 40 seconds, for the drying and curing operations. Alternative mat forming methods useful in forming mat for the present invention include the use of well-known cylinder forming and "dry laying."

Optionally the fibrous mats of the present invention further contain fillers, pigments, or other inert or active ingredients either throughout the mat or concentrated on a surface. For example, the mat can contain an effective amount of fine particles of limestone, glass, clay, coloring pigments, biocide, fungicide, intumescent material, or mixtures thereof. Such additives may be added for known structural, functional, or aesthetic qualities imparted thereby. These qualities include coloration, modification of the structure or texture of the surface, resistance to mold or fungus formation, and fire resistance. Preferably, flame retardants sufficient to provide flame resistance, e.g. according to NFPA Method 701 of the National Fire Protection Association or ASTM Standard E84, Class 1, by the American Society for the Testing of Materials, are added. Biocide is preferably added to the mat and/or gypsum slurry to resist fungal growth, its effectiveness being measurable in accordance with ASTM Standard D3273. The mats and gypsum layer of the present invention preferably have a very low cellulosic fiber content from which microbes could derive nutrition. More preferably any cellulosic fiber present in the mats or gypsum is only an impurity of other ingredients.

The coating composition employed for the non-woven fiber mat comprises mineral pigments along with an organic binder. The mineral pigments are such that the coating does penetrate the fiber mat and provides a unique combination of surface porosity and surface smoothness. Generally, the mineral pigments are of a size of less than 6µ, and more preferably less than 5µ, and most preferably about 3µ or less. The mineral pigment and binder penetrate either partially or fully through the mat, with the pigment being selected so as to provide a controlled porosity that permits evaporation of water vapor, but still acts as a water barrier and does not allow water to pass through the mat. Most preferred mineral pigments are pigments such as calcium carbonate and talc.

In a most preferred embodiment, the mineral pigments are calcium carbonate. Calcium carbonate comes in several sizes. Calcium carbonate is also commercially available, for instance it is available under the trademark Atomite^{™}. The size of the mineral pigments is generally such as to permit air permeability of the fiber mat, but also impart a smooth surface to the mat. A particle size of about 3 micron is preferred. Calcium carbonate at such a particle size has unique packing characteristics in a dried coating layer on top of a non-woven fiber web such as a fiberglass web. Using calcium carbonate at such a size provides controlled air permeability at a much lower coating weight than when larger particle sizes are employed.

The coating weight is generally measured as grams per square feet, and air permeability can be measured using many different known methods, e.g., it can be measured in seconds of a known amount of air mass to pass through the web, as measured by instruments such as the "Gurley Densonater". Generally, the air permeability of the coated mats of the present invention is less than 60 seconds and more preferably less than 50 seconds, and most preferably less than 40 seconds and in the range of from about 20-40 seconds. The air permeability of a mat can also be conventionally measured by the air flow between reservoirs separated by the mat using a test called the Frazier test, which is further described by ASTM Standard Method D737, with the results ordinarily being given in units of cubic feet per minute per square foot (cfm/ft²). The test is usually carried out at a differential pressure of about 0.5 inches of water. In preferred embodiments, the permeability of the present mat, as measured by the Frazier method, is at least about 250, and more preferably, at least about 300 cfm/ft².

The ability of the present invention to control the air permeability without employing a very heavy coating has great cost advantage. A controlled permeability is needed for downstream converting processes, particularly when the non-woven web is used as a facer for a gypsum board. A highly permeable facer would lead to bleed through of underlying material such as gypsum in a wallboard converting process, whereas very low permeability would lead to moisture being trapped in the downstream converting process of a gypsum board. The present invention permits one to control the permeability by selecting the particular mineral pigment, its size and its packing characteristics, while also imparting a very smooth surface to the non-woven mat.

The coating composition further comprises an organic binder, and is preferably a blend of thermoplastic latexes as the organic binder. Such thermoplastic latexes are well known, as discussed above. It is found that a blend of such latexes provides the best results and are therefore preferred. The use of an aqueous thermoset resin such as an acrylic or epoxy resin is also preferred. Other examples of suitable organic binders includes non-acrylic based (e.g., branched vinyl ester) polymers, or a mixture of an aqueous thermoplastic dispersion and thermoset resin. It is also possible to mix an acrylic monomer or other suitable monomer with an initiator and the mineral pigment to create in situ the organic binder.

The coating composition can also include additional, conventional additives such as surfactants, rheology modifiers, oxidative stabilizers, colorants, biocides, etc.

In a preferred embodiment the fiber mats of the present invention comprise a non-woven web bonded together with a resinous binder and coated in accordance with the present invention, with the mat being used for one or both of the large faces of gypsum board. In such an application, the web preferably comprises chopped continuous glass fibers, of which preferably at least about 90 percent, more preferably at least about 95 percent, and most preferably at least about 97 percent have a fiber diameter of less than 30µ, and more preferably within a narrow range of about 11.±.1.5 µm. Although mixtures of different lengths of chopped strand fibers are contemplated and included within the scope of the invention, it is most preferred that a majority of the fibers have lengths greater than 2 mm, and more preferably lengths of 12.±.6 mm. The present web also includes a small fraction of fibers that are broken into two or more pieces and a very small fraction of small glass fibers and chips. The presence of such broken and chipped fibers in a chopped fiber product is well known in the fiber industry.

Chopped strand fibers are readily distinguishable from staple fibers by those skilled in the art. Staple fibers are usually made by processes such as rotary fiberization or flame attenuation of molten glass known in the fiber industry. They typically have a wider range of lengths and fiber diameters than chopped strand fibers. By way of contrast, it would have been anticipated that the smoothest mats would be obtained with a preponderance of fine fibers.

Even more importantly, the surface of boards made in accordance with the present invention has an improved "hand," i.e., an improved subjective feel, and better accepts surface treatments because of its greater smoothness. Even after prior art boards are coated with substantial amounts of paint in multiple coats, the texture of the facing mat in many instances remains visible, making the surface aesthetically unpleasing for many applications. By way of contrast, the present boards may be finished to provide an aesthetic and functional surface with far less paint and the associated labor to prepare the surface and apply the paint or other desired finish, wallpaper or other coating, or the like.

It is preferred that the binder used for the present mats comprise an effective amount of a water repellant to limit the intrusion of gypsum slurry during board production. For example, vinyl acrylate latex copolymers may further incorporate stearylated melamine for improvement in water repellency, preferably at a level ranging from about 3 to 10 wt. %, and more preferably at about 6 wt. %. A suitable aqueous stearylated melamine emulsion is available from the Sequa Chemical Corporation, Chester, S.C., under the tradename SEQUAPEL^{™} 409. The stearylated melamine is in liquid form having a solids content of about 40 wt. percent and is mixed with a suitable copolymer latex and water to prepare binders for the mats. This material mixture has a pH of about 9, a viscosity of about 45 centipoises and is anionic. In addition, gypsum board incorporating mat with the preferred binder is more resistant to abrasion than conventional either fiber-faced or paper-faced boards.

Gypsum board in accordance with the present invention preferably is faced with a mat having a basis weight ranging from about 0.6 to 2.2 pounds per 100 square feet, more preferably ranging from about 0.9 to 2.2 Ibs./100 sq. ft., and most preferably about 1.25.+-.0.2 Ibs./100 sq. ft. (about 29-110, 45-110, and 60.+-.10 g/m², respectively). Preferably the binder content of the dried and cured mats ranges from about 10 to 35 wt. percent, more preferably from about 15 to 30 wt. percent, and most preferably from about 25.+-.3 wt. percent, based on the weight of the finished mat. The basis weight must be large enough to provide the mat with sufficient tensile strength for producing quality gypsum board. At the same time, the binder content must be limited for the mat to remain sufficiently flexible to permit it to be bent to form the corners of the board, as shown in FIG. 1. Furthermore, too thick a mat renders the board difficult to cut during installation. Such cuts are needed both for overall size and to fit the board around protrusions such as plumbing and electrical hardware.

The utility of the present mat is advantageous due to its controlled air permeability. During the gypsum board formation process, far more water is present in the gypsum slurry than is stochiometrically needed to drive the gypsum rehydration reaction. The excess is removed during a drying operation, and preferably escapes through the facings. The facers of the present invention must have sufficient permeability to allow the drying to be accomplished within an acceptable time period and without bubbling, delamination, or other degradation of the facer.

The invention further provides a method for making gypsum board and other hydraulic set and cementitious board products for interior and/or exterior use, i.e. products appointed for installation on either interior or exterior surfaces of building structures. By exterior surface is meant any surface of a completed structure expected to be exposed to weather; by interior surface is meant a surface within the confines of an enclosed, completed structure and not intended to be exposed to weather. The above-described non-woven, fibrous mat is present on at least one of the large faces of the gypsum board.

Gypsum wallboard and gypsum panels are traditionally manufactured by a continuous process. In this process, a gypsum slurry is first generated in a mechanical mixer by mixing at least one of anhydrous calcium sulfate (CaSO₄) and calcium sulfate hemihydrate (CaSO₄1/2H₂O, also known as calcined gypsum), water, and other substances, which may include set accelerants, waterproofing agents, reinforcing mineral, glass fibers, and the like. The gypsum slurry is normally deposited on a continuously advancing, lower facing sheet, such as kraft paper. Various additives, e.g. cellulose and glass fibers, are often added to the slurry to strengthen the gypsum core once it is dry or set. Starch is frequently added to the slurry in order to improve the adhesion between the gypsum core and the facing. A continuously advancing upper facing sheet is laid over the gypsum and the edges of the upper and lower facing sheets are pasted to each other with a suitable adhesive. The facing sheets and gypsum slurry are passed between parallel upper and lower forming plates or rolls in order to generate an integrated and continuous flat strip of unset gypsum sandwiched between the sheets. Such a flat strip of unset gypsum is known as a facing or liner. The strip is conveyed over a series of continuous moving belts and rollers for a period of several minutes, during which time the core begins to hydrate back to gypsum (CaSO₄2H₂O). The process is conventionally termed "setting," since the rehydrated gypsum is relatively hard. During each transfer between belts and/or rolls, the strip is stressed in a way that can cause the facing to delaminate from the gypsum core if its adhesion is not sufficient. Once the gypsum core has set sufficiently, the continuous strip is cut into shorter lengths or even individual boards or panels of prescribed length.

After the cutting step, the gypsum boards are fed into drying ovens or kilns so as to evaporate excess water. Inside the drying ovens, the boards are blown with hot drying air. After the dried gypsum boards are removed from the ovens, the ends of the boards are trimmed off and the boards are cut to desired sizes. The boards are commonly sold to the building industry in the form of sheets nominally 4 feet wide and 8 to 12 feet or more long and in thicknesses from nominally about 1/4 to 1 inches, the width and length dimensions defining the two faces of the board.

The gypsum board production method can comprise the steps of: forming an aqueous slurry comprising at least one of anhydrous calcium sulfate, calcium sulfate hemi-hydrate, or cement; distributing the slurry to form a layer on a first facing; applying a second facing onto the top of the layer; separating the resultant board into individual articles; and drying the articles. The fibers in the web are bound together with a polymeric binder. Alternatively, the slurry may be distributed to form a layer between two facings. The slurry optionally includes reinforcing fibers or other known additives used as process control agents or to impart desired functional properties to the board, including one or more of agents such as biocides, flame retardants, and water repellents. The product of the invention is ordinarily of a form known in the building trades as board, i.e. a product having a width and a length substantially greater than its thickness. Gypsum and other hydraulic set and cementitious board products are typically furnished commercially in nominal widths of at least 2 feet, and more commonly 4 feet. Lengths are generally at least 2 feet, but more commonly are 8-12 feet.

Having thus described the invention in detail, it will be understood that such detail need not be strictly adhered to, but that additional changes and modifications may suggest themselves to one skilled in the art, all falling within the scope of the invention as defined by the subjoined claims.

## Claims

1. A non-woven mat with a coating comprising a mineral pigment and an organic binder, the coating penetrating the mat such as to control porosity of the mat and impart a smooth surface to the mat.

2. The non-woven mat of claim 1, wherein the mineral pigment comprises calcium carbonate or talc.

3. The non-woven mat of claim 2, wherein the mineral pigment comprises primarily calcium carbonate.

4. The non-woven fiber mat of claim 3, wherein the calcium carbonate has an average size of about a 3 micron diameter.

5. The non-woven fiber mat of claim 1, wherein the binder comprises a polymer latex.

6. The non-woven fiber mat of claim 5, wherein the binder is a mixture of polymeric latexes.

7. The non-woven fiber mat of claim 1, wherein the fiber mat comprises a majority of fiberglass as the fibers.

8. The non-woven fiber mat of claim 7, wherein the mat contains a minor amount of polymeric fibers.

9. A gypsum board having a facing comprising the non-woven fiber mat of claim 1.

10. A gypsum board having a facing comprising the non-woven fiber mat of claim 7.

11. A foam board having a facing comprising the non-woven fiber mat of claim 1.

12. A foam board having a facing comprising the non-woven fiber mat of claim 7.

13. A wood board having a facing comprising the non-woven fiber mat of claim 1.

14. A wood board having a facing comprising the non-woven fiber mat of claim 7.

15. The gypsum board of claim 7, wherein the pigment comprises calcium carbonate.

16. The gypsum board of claim 15, wherein the calcium carbonate has an average size of about 3 micron in diameter.
